# EUROPÄISCHE PATENTSCHRIFT

(11) **EP 0 769 638 B1**
(45) Veröffentlichungstag und Bekanntmachung des Hinweises auf die Patenterteilung: **05.12.2001**
(21) Anmeldenummer: 95114390.8
(22) Anmeldetag: 21.10.1995
(51) Int. Cl.: F16F 13/10, F16F 1/387

(54) **Querweiche Tragfeder für ein Hydrolager**
Tranversely resilient support spring for a hydromount
Ressort de support à élasticité transversale pour un support hydraulique

(43) Veröffentlichungstag der Anmeldung: 23.04.1997
(73) Patentinhaber: WOCO Franz-Josef Wolf & Co., 63628 Bad Soden-Salmünster (DE)
(72) Erfinder: Wolf, Franz Josef, D-63628 Bad Soden-Salmünster (DE); Nix, Stefan, D-63607 Wächtersbach-Aufenau (DE); Mohr, Martin, D-63628 Bad Soden-Salmünster (DE)
(74) Vertreter: Jaeger, Klaus, Dipl.-Chem. Dr.

(56) Entgegenhaltungen:
- EP-A- 0 248 714
- EP-A- 0 354 381
- FR-A- 2 446 421
- FR-A- 2 555 272
- GB-A- 863 720
- US-A- 2 614 896
- PATENT ABSTRACTS OF JAPAN vol. 10 no. 246 (M-510) [2302] ,23.August 1986 & JP-A-61 074927 (TOYO TIRE & RUBBER CO LTD) 17.April 1986,

## Beschreibung

Die vorliegende Erfindung betrifft ein Hydrolager zur dämpfenden Anordnung schwingender Massen mit einem gummielastischen Tragkörper gemäß dem Oberbegriff des Anspruchs 1.

Derartige Hydrolager werden überall dort eingesetzt, wo es erforderlich ist, die Schwingungen schwingender Massen klein zu halten, das heißt also deren Schwingungsamplituden zu dämpfen. Gleichzeitig müssen diese Hydrolager dazu in der Lage sein, das durch die Schwingungen bewegter Massen aufgrund der Übertragung der Körperschwingungen an die umgebende Luft verursachte Geräuschprofil zu beeinflussen.

Ein typischer Anwendungsfall derartiger dämpfender Lager ist der Bereich des Kraftfahrzeugbaus, bei dem die Merkmale des Benutzungskomforts eine zunehmend bedeutsamere Rolle spielen.

Derartige Hydrolager werden dabei häufig als Motorlager eingesetzt, wobei sie sowohl statische als auch dynamische Lasten in die Karosserie des Kraftfahrzeuges einleiten.

Hierbei rührt die statische Belastung von der Eigenmasse des Motors her, während die dynamische Belastung durch Motorschwingungen in vielfacher Hinsicht induziert wird. So führt beispielsweise das Starten des Motors oder aber die Fahrt des Fahrzeuges über große Bodenunebenheiten zu niederfrequenten Schwingungen mit großen Störamplituden, während der Lauf des Motors bei hohen Drehzahlen zu hochfrequenten Schwingungen mit kleinen Störamplituden führt.

Aufgrund der bereits angeführten hohen Anforderungen an den Benutzungskomfort ist es erforderlich, dass derartige Hydrolager Schwingungsamplituden bedämpfen, die im Lager zu Kraftverläufen in allen drei möglichen Raumrichtungen führen.

Diese Schilderung macht es deutlich, dass die Kennlinien derartiger Motorlager nach Möglichkeit unabhängig voneinander einstellbar sein sollten bezüglich der Dämpfungswirkung des Hydrolagers im Falle einer in Lageraxiallängsrichtung verlaufenden Belastung und einer quer zur Axiallängsrichtung des Hydrolagers verlaufenden Belastung, also einer in Lagerradialrichtung verlaufenden Last.

Als ein solches diese Anforderungen erfüllendes Hydrolager oder hydraulisch bedämpftes Motorlager ist ein Hydrolager mit Zwischenring bekannt. Es bedeutet dies, dass der gummielastische Tragkörper dieses bekannten Lagers im Bereich seiner sich kegelstumpfförmig nach außen gerichtet erstreckenden Basis eine vorzugsweise metallische Einlage aufweist, die sich quer zur Kraftflussrichtung im Tragkörper erstreckt und ein Knicken oder Bauchen der sich nach außen gerichtet erstreckenden Basis des Tragkörpers verhindern soll. Hierdurch wird erreicht, dass sich unterschiedliche Kennlinienverläufe des bekannten Hydrolagers in axialer und radialer Richtung des Lagers einstellen lassen, wobei diese bekannten Lager auch ein relativ gutes akustisches Verhalten, also eine niedrige dynamische Federrate aufweisen, aber mit dem Problem behaftet sind, dass zwischen dem regelmäßig aus Gummi bestehenden Tragkörper und dem metallischen Zwischenring eine stoffschlüssige Verbindung in Form eines aufwendigen Vulkanisationsvorgangs stattfinden muss, was zu einer nicht unerheblichen Kostenbelastung führt. Dies ist deshalb von großer Bedeutung, da derartige Hydrolager im Falle des Einsatzes in Kraftfahrzeugen dem Preisdruck eines Massenprodukts unterliegen und deshalb oftmals nur in Hochpreisprodukten eingesetzt werden.

Auch weisen diese bekannten Hydrolager den Nachteil auf, dass im Bereich der Trennfläche zwischen dem gummielastischen Tragkörper und dem metallischen Zwischenring hohe Kerbspannungen, also Scher- bzw. Schubspannungen auftreten, die zu einem Ausfall des bekannten Lagers führen und damit zu einer reduzierten Dauerfestigkeit.

Das Weglassen des Zwischenrings beseitigt zwar dieses Problem der Scherspannungen und führt auch zu niedrigeren Herstellungskosten, bedingt aber gleichzeitig den Nachteil, dass ein derartiger Tragkörper ohne Zwischenring ein unabänderliches Kennlinienverhältnis in axialer und radialer Richtung aufweist. Dies führt letztlich auch zu einer erhöhten Geräuschbelastung beispielsweise im Fahrzeuginnenraum, da der Tragkörper dieses Lagers auf die maximal möglichen Belastungen und damit Störschwingungen ausgelegt werden muss, so dass er nicht mehr dazu in der Lage ist, kleine Störamplituden wirksam zu bedämpfen, so dass sich die hieraus ergebende Geräuschbelastung nahezu unvermindert in den Fahrzeuginnenraum fortpflanzen kann.

Weiterhin ist ein Hydrolager zur dämpfenden Anordnung schwingender Massen mit einem gummielastischen Tragkörper, in den eine Aufnahmevorrichtung mit einer Bohrung zum Verbinden des Lagers mit der schwingenden Masse hineinragt und in diesem eingebettet ist, und mit einem Gehäuse, das den Tragkörper kraftschlüssig an einer Anordnungsvorrichtung abstützt, gemäß der FR-A-2 555 272 bekannt.

Ausgehend von diesem Stand der Technik liegt der vorliegenden Erfindung die Aufgabe zugrunde, ein Hydrolager zur dämpfenden Anordnung schwingender Massen zu schaffen, mit dem es möglich ist, sowohl das akustische als auch das Festigkeitsverhalten in radialer und axialer Richtung unabhängig voneinander einzustellen, wobei das zu schaffende Hydrolager kostengünstig sein und zudem eine hohe Dauerfestigkeit aufweisen soll.

Das zur Lösung dieser Aufgabe geschaffene Hydrolager weist die im Anspruch 1 angegebenen Merkmale auf. Vorteilhafte Ausgestaltungen hiervon sind in den weiteren Ansprüchen beschrieben.

Erfindungsgemäß ist ein Hydrolager zur dämpfenden Anordnung schwingender Massen vorgesehen mit einem gummielastischen Tragkörper, in den eine Aufnahmevorrichtung mit einer Bohrung zum Verbinden des Lagers mit der schwingenden Masse hineinragt und in diesem eingebettet ist, und mit einem Gehäuse, das den Tragkörper kraftschlüssig an einer Anordnungsvorrichtung abstützt, bei dem der Tragkörper mindestens eine axiale Materialaussparung aufweist, die auf einem zur Bohrung der Aufnahmevorrichtung konzentrischen Kreissegment angeordnet ist und sich axial von einer Stirnseite des Tragkörpers her in Richtung zur gegenüberliegenden Stirnseite des Tragkörpers erstreckt und dabei die Aufnahmevorrichtung an der Stirnseite so durchsetzt, dass die Wandflächen der mindestens einen Aussparung unter statischer Vorlast zueinander beabstandet bleiben.

Hierdurch wird in vorteilhafter Weise die Einstellbarkeit der sich bei axialer bzw. radialer Belastung des Hydrolagers ergebenden Kennlinien erreicht, da bei statischer Belastung dieses Hydrolagers ein in Lagerlängsrichtung weiches Hydrolager geschaffen ist, wobei sich der gummielastische Tragkörper auch in seiner radialen Richtung leicht verformen kann, so dass er in dieser Richtung in Form von Schwingungen auftretende Belastungen gut bedämpfen kann und die Kennlinien sich aufgrund der Größe und Form der sich in weitgehend Tragkörperaxialrichtung erstreckender Materialaussparungen beeinflussen lassen.

Gemäß der Erfindung ist dabei vorgesehen, dass die Materialaussparungen weitgehend kreiszylindrisch ausgebildet sind. Durch die Anordnung und die Lage der weitgehend kreiszylindrisch ausgebildeten Materialaussparungen, die auf einem zur Bohrung der Aufnahmevorrichtung konzentrischen Kreissegment angeordnet sind, werden sowohl die axiale als auch die radiale Steifigkeit des Hydrolagers unabhängig voneinander einstellbar, da hierzu beispielsweise bei einem kreiszylindrischen Tragkörper derartige kreiszylindrische Materialaussparungen im Bereich einer Axiallängsschnittebene des Tragkörpers angeordnet sind, während im Bereich einer auf dieser Axiallängsschnittebene senkrechten Axialschnittebene ein durchgehender Tragkörper gewählt ist, also ein Tragkörper ohne Materialaussparungen. Dies führt dazu, dass das mit diesem Tragkörper gebildete Lager in Richtung der mit Materialaussparungen versehenen Axiallängsschnittebene weicher ausgebildet ist als in Richtung derjenigen Axiallängsschnittebene, die keine Materialaussparungen aufweist.

Hierbei können in vorteilhafter Weise die Materialaussparungen derart angeordnet sein, dass sich die Konturen der Materialaussparungen axial an ihrem Außenumfang berühren oder einander unter Bildung von Ringspaltsektoren durchdringen.

Hierdurch wird es ermöglicht, dass die unterschiedlichsten Formen von Materialaussparungen im Tragkörper gebildet werden, je nachdem welche Kennlinieneigenschaften des so gebildeten Hydrolagers in axialer und radialer Richtung erforderlich sind.

In Weiterbildung der Erfindung ist dabei vorgesehen, dass an der Stirnseite des Tragkörpers, die derjenigen Stirnseite des Tragkörpers, von der her sich die axialen Materialaussparungen erstrecken, gegenüberliegt, mindestens eine sich nach radial auswärts erstreckende Materialaussparung so vorgesehen ist, dass die mindestens eine radiale Materialaussparung in Axialrichtung des Tragkörpers zu der mindestens einen axialen Materialaussparung in der Radialebene winkelig versetzt angeordnet ist.

Es bedeutet dies mit anderen Worten, dass ein Tragkörper vorgesehen ist, der Materialaussparungen aufweist, die sich entlang seiner Längsrichtung erstrecken und dabei beispielsweise von einer Stirnseite des Tragkörpers in den Tragkörper nach innen gerichtet entlang seiner Längsrichtung verlaufen und aber nicht bis in den Bereich der dieser Stirnseite gegenüberliegenden Stirnseite erstrecken. Im Bereich unterhalb der Endabschnitte dieser in Tragkörperaxiallängsrichtung sich erstreckender Materialaussparungen ist dann eine sich nach radial auswärts quer zu diesen längs verlaufenden Materialaussparungen verlaufende weitere Materialaussparung vorgesehen, die winkelig versetzt verläuft zu den in Tragkörperaxiallängsrichtung verlaufenden Materialaussparungen und daher nicht direkt unterhalb der längs verlaufenden Materialaussparungen vorgesehen ist.

Hierdurch wird in vorteilhafter Weise erreicht, dass bei dem bereits angesprochenen Belastungsfall der in Axiallängsrichtung als auch in radialer Richtung zum Tragkörper auftretender Schwingungsbelastungen, beispielsweise im Fall einer Pendellagerung und damit auftretender Radialkräfte, die sich hieraus ergebenden Radialbewegungen nicht zu Überdehnungen und damit zu überhöhten Zugspannungen im Tragkörper führen. Durch diese sich nach radial auswärts erstreckende Materialaussparung wird dem Tragkörper eine in radialer Richtung vergrößerte Nachgiebigkeit zuteil, die zu einer Abnahme der Neigung des Tragkörpers zur Verhärtung und damit zur Steifigkeit führt, wodurch in vorteilhafter Weise bei dynamischer Beanspruchung eine niedrige dynamische Federrate erreicht wird aufgrund des sich so ergebenden vergrößerten Federweges, wodurch letztlich ein gutes akustisches lsolationsverhalten und damit eine hohe Geräuschdämpfungsfähigkeit dieses Hydrolagers erreicht wird.

In Fortführung der Erfindung ist dabei vorgesehen, dass die radiale Materialaussparung derart ausgebildet ist, dass sie sich von nahe der Aufnahmevorrichtung im Tragkörper her nach radial außen erstreckt und so ausgebildet ist, dass ihre radial innenliegende Wandfläche und ihre radial außenliegende Wandfläche axial unterschiedliche Höhen haben. Es kann also auch ein Tragkörper vorgesehen sein, dessen sich nach radial auswärts erstreckende Materialaussparung symmetrisch zu einer Axiallängsschnittmittelebene des Tragkörpers ist, sich also im Bereich des gesamten Durchmessers des Tragkörpers erstreckt. Hierdurch wird in vorteilhafter Weise erreicht, dass selbst bei unterschiedlichsten Tragkörperausbildungen die Einstellbarkeit der Kennlinie des so gebildeten Hydrolagers in radialer Richtung ermöglicht ist.

Dabei kann die radiale Materialaussparung nahe der Aufnahmevorrichtung die gleiche oder eine andere Aussparungsquerschnittsfläche aufweisen als nahe der Außenfläche des Tragkörpers. Hierdurch wird ermöglicht, dass beispielsweise eine progressive oder degressive Kennlinie des somit gebildeten Hydrolagers bei Belastung dieses Lagers in radialer Richtung erreichbar ist.

Die Erfindung wird im folgenden anhand der Zeichnung näher erläutert. Diese zeigt in
- Fig. 1: einen erfindungsgemäßen Tragkörper im Axialschnitt und
- Fig. 2: in Draufsicht in einer ersten Ausführungsform sowie
- Fig. 3: in einer zweiten Ausführungsform;
- Fig. 4: das Hydrolager in einem Teilaxialschnitt und
- Fig. 5: das Lager nach Fig. 4 in Draufsicht sowie
- Fig. 6: ein Hydrolager mit dem Tragkörper teilweise geschnitten.

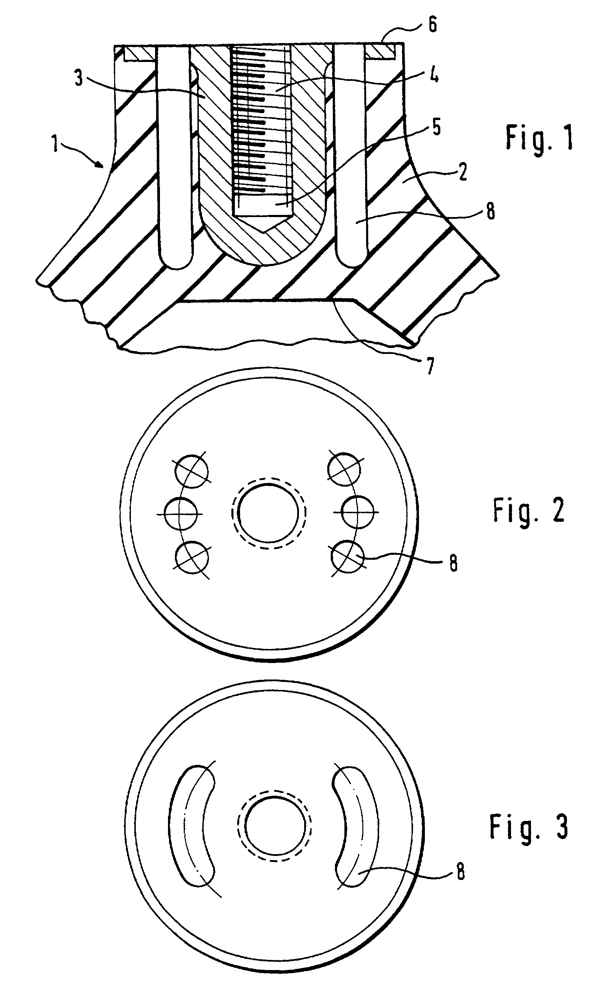

Wie aus Fig. 1 der Zeichnung, einer schematischen Axialschnittdarstellung eines Hydrolagers, ersichtlich ist, weist das Hydrolager 1 in der dargestellten Ausführungsform im wesentlichen einen gummielastischen Tragkörper 2 auf, welcher konzentrisch zu einer innerhalb des Tragkörpers 2 angeordneten Aufnahmevorrichtung 3 vorgesehen ist. Die Aufnahmevorrichtung 3 ist dabei aus einem metallischen Werkstoff gefertigt und besitzt eine mit einem Innengewinde 4 versehene Bohrung 5 und dient der Anordnung einer schwingenden Masse, die im dargestellten Ausführungsbeispiel eine nicht dargestellte Verbrennungskraftmaschine sein kann.

Wie leicht ersichtlich, sind im Tragkörper 2 des Hydrolagers 1 im Bereich nahe der Aufnahmevorrichtung 3 weitgehend kreiszylindrisch ausgebildete Materialaussparungen vorgesehen, die von der oberen Stirnseite 6 des Tragkörpers in Richtung der dieser Stirnseite 6 gegenüberliegend angeordneten Stirnseite 7 des Tragkörpers verlaufen.

Wie näher aus Fig. 2 der Zeichnung ersichtlich, sind die weitgehend kreiszylindrisch ausgebildeten Materialaussparungen 8 entlang eines Teilkreisumfanges eines sich um die Bohrung 5 erstreckenden konzentrischen Kreises im Bereich zweier Kreissektoren von jeweils etwa 60° Zentriwinkel äquidistant angeordnet. Hierdurch wird in vorteilhafter Weise erreicht, dass der Tragkörper 2 bei Belastung in seiner Axiallängsrichtung eine gewisse Weichheit aufweist, die er in ähnlicher Weise auch bei einer radialen Belastung in Richtung der mit Materialaussparungen 8 versehenen Axiallängsschnittmittelebene besitzt, während der Tragkörper 2 in Richtung der Ebene, die senkrecht zur vorerwähnten Axiallängsschnittmittelebene liegt, steifer ausgebildet ist.

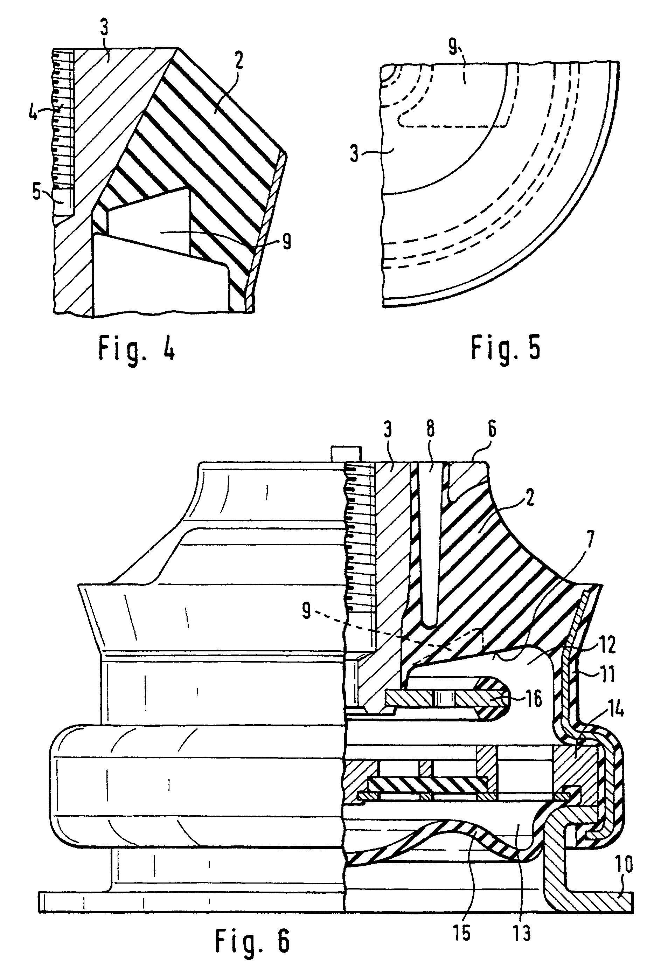

Die Steifigkeit des den Tragkörper 2 aufweisenden Hydrolagers 1 kann weiter variiert werden - wie leicht aus Fig. 3 der Zeichnung ersichtlich - wenn die Materialaussparungen 8 derart angeordnet sind, dass sie sich axial an ihrem Außenumfang berühren oder einander unter Bildung Ringspaltsektoren durchdringen, so dass beidseits radial der Bohrung 5 Materialaussparungen 8 gebildet sind, während das Hydrolager in Richtung einer Belastung senkrecht zur Ebene, in der diese Materialaussparungen 8 liegen, steifer ausgebildet ist.

Fig. 4 der Zeichnung zeigt ein Hydrolager in einer weiteren Ausführungsform, wobei sich diese Ausführungsform von den vorerwähnten dadurch unterscheidet, dass im Tragkörper 2 des Hydrolagers 1 nach Fig. 4 eine zusätzliche radiale Materialaussparung 9 vorgesehen ist, die sich ganz allgemein in Axialrichtung des Tragkörpers 2 erstreckt, also in einer Richtung von nahe der Aufnahmevorrichtung 3 weg nach außen gerichtet zum Außenumfang des Tragkörpers 2 hin.

Im dargestellten Ausführungsbeispiel weist dabei die radiale Materialaussparung im Bereich ihrer inneren Erstreckung, also nahe der Aufnahmevorrichtung 3 eine geringere lichte Höhe auf als im Bereich ihrer radial äußeren Erstreckung, also nahe dem Außenumfang des Tragkörpers 2. Hierdurch ist erreicht, dass das den Tragkörper 2 aufweisende Hydrolager 1 bei Belastungen in radialer Richtung, das heisst also in einer Richtung quer zur Axiallängsrichtung des Tragkörpers 2 eine von einem linearen Verlauf abweichende Kennlinie besitzt, die einerseits ein gutes Dämpfungsverhalten zulässt und andererseits auch eine bei größeren Störamplituden, beispielsweise bei in Laufrichtung des Fahrzeugs auftretender Längsschwingungen durch Bodenunebenheiten und damit erhöhter dynamischer Belastungen ein Aufschaukeln verhindert.

Zudem wirkt die radiale Materialaussparung 9 bei sich somit ergebenden Radialbewegungen partiellen Überdehnungen des Tragkörpers 2 und sich daraus andernfalls ergebender überhöhter Zugspannung entgegen und wirkt insofern als Entlastungsnut, die einer die Dauerfestigkeit des Hydrolagers 1 beeinflussender Überbeanspruchung entgegenwirkt.

In Richtung des Betrachters des Lagers 1 nach Fig. 4 hinter der radialen Materialaussparung 9 sind dabei de Kennlinie des Lagers 1 beeinflussende axiale Materialaussparungen 8 vorgesehen, die aufgrund der gewählten Darstellung in dem gezeigten Teilaxiallängsschnitt des Lagers 1 nicht sichtbar sind.

Fig. 5 der Zeichnung zeigt das Lager 1 in der Ausführungsform nach Fig. 4 in einer Draufsicht. Die radiale Materialaussparung 9, die sich von nahe der Aufnahmevorrichtung im Tragkörper 2 her nach radial außen erstreckt, weist bei dem Ausführungsbeispiel nach Fig. 4 und 5 eine sich im Bereich ihrer gesamten radialen Erstreckung gleichbleibende Breite auf, jedoch besitzen die radial innenliegende Wandfläche und die radial außenliegende Wandfläche der Materialaussparung 9 axial unterschiedliche Höhen.

Fig. 6 der Zeichnung schließlich zeigt ein den Tragkörper 2 aufweisendes Hydrolager 1.

Das Hydrolager 1 nach Fig. 6 weist eine insgesamt rotationssymmetrische Struktur auf und besitzt eine einem nicht dargestellten Motor zugewandte Aufnahmevorrichtung 3, die vom Tragkörper 2 umgeben wird, der wiederum in einem mehrteiligen topfförmigen mit einem Anschlussflansch 10 versehenen Gehäuse 11 vorgesehen ist.

Im Raum innerhalb des Gehäuses 11 unterhalb des Tragkörpers 2 ist eine Arbeitskammer 12 ausgebildet, in der ein Fluid angeordnet sein kann.

Die Arbeitskammer 12 wird von einer ebenfalls im Gehäuse 11 gebildeten Ausgleichskammer 13 getrennt, wobei als trennende Einrichtung eine Vorrichtung 14 vorgesehen ist, die Durchflusseinrichtungen, beispielsweise in Form eines Ringkanals mit Durchlasssteuerventilen und dergleichen aufweisen kann derart, dass bei einer Belastung des Lagers 1 eine Verformung des Tragkörpers 2 zu einem Druckanstieg des in der Arbeitskammer 12 angeordneten Fluids führt, der einen Ausgleich dadurch findet, dass das Fluid durch den in der Vorrichtung 14 gebildeten Ringkanal in die Ausgleichskammer 13 strömt, in welcher der dadurch bedingte Druckanstieg durch eine Verformung der die Ausgleichskammer 13 nach außen abschließenden Membran 15 ausgeglichen wird.

Unterhalb des Tragkörpers 2 ist dabei eine Verdrängerscheibe 16 angeordnet, die zu einer Erhöhung der gewünschten Dämpfungsarbeit führt, da sie innerhalb der fluidgefüllten Arbeitskamme4r 12 angeordnet ist, wodurch bei Bewegung der Verdrängerscheibe 16 Reibungsarbeit verrichtet wird. Wie leicht aus Fig. 6 der Zeichnung ersichtlich, ist im Bereich der der Stirnseite 6 gegenüberliegenden Stirnseite 7 des Tragkörpers 2 eine radiale Materialaussparung 9 vorgesehen, die als Entlastungsnut wirkend dafür sorgt, dass das den Tragkörper 2 aufweisende Lager 1 eine hohe Dauerfestigkeit aufweist, da partielle Überdehnungen und damit überhöhte Zugspannungen des Tragkörpers 2 bei radialer Belastung des Lagers 1 vermieden sind.

Das den Tragkörper 2 aufweisende Hydrolager 1 weist den Vorteil auf, dass durch die sich in Axiallängsrichtung des Tragkörpers 2 verlaufenden Materiaiaussparungen und den sich quer dazu, das heißt also weitgehend in radialer Richtung des Tragkörpers 2 erstreckenden radialen Materialaussparungen eine Einstellbarkeit der axialen und radialen Kennungen dieses Lagers 1 ermöglicht ist. Durch diese ganz besondere Ausgestaltung ist es möglich, jede mögliche Federkennung in radialer/axialer Richtung einzustellen. Aufgrund dieser Anordnung wird auch der Zwischenring nach den bekannten Anordnungen vermieden, so dass ein insgesamt niedriges Spannungsniveau erreicht wird, da es nicht mehr zu hohen Scherspannungen am Zwischenring kommen kann.

Die Anordnung der in Axiallängsrichtung des Tragkörpers 2 verlaufenden Materialaussparung 8 führt zu einer abnehmenden Neigung zum Blähen des Tragkörpers 2, wodurch eine insgesamt höhere Verlustarbeit erreichbar ist. Das Weglassen des Zwischenrings führt zu einer vorteilhaften Verschiebung der Eigenfrequenz des Tragkörpers zu hohen Frequenzen hin, wodurch es bei niederfrequenten Störamplituden nicht mehr zu einem Ankoppeln und damit einer zum Resonieren neigenden Schwingung des Schwingungssystems Motor und Motorlager kommen kann, wodurch eine nachhaltige Zerstörung des erfindungsgemäßen Lagers sicher vermieden ist.

Hinsichtlich vorstehend im einzelnen nicht näher erläuterter Merkmale der Erfindung wird im übrigen ausdrücklich auf die Ansprüche und die Zeichnung verwiesen.

## Patentansprüche

1. Hydrolager (1) zur dämpfenden Anordnung schwingender Massen mit einem gummielastischen Tragkörper (2), in den eine Aufnahmevorrichtung (3) mit einer Bohrung (5) zum Verbinden des Lagers (1) mit der schwingenden Masse hineinragt und in diesem eingebettet ist, und mit einem Gehäuse (11), das den Tragkörper (2) kraftschlüssig an einer Anordnungsvorrichtung abstützt,
**dadurch gekennzeichnet,**
**daß** der Tragkörper (2) mindestens eine axiale Materialaussparung (8) aufweist, die auf einem zur Bohrung (5) der Aufnahmevorrichtung (3) konzentrischen Kreissegment angeordnet ist und sich axial von einer Stirnseite (6) des Tragkörpers (2) her in Richtung zur gegenüberliegenden Stirnseite (7) des Tragkörpers (2) erstreckt und dabei die Aufnahmevorrichtung (3) an der Stirnseite (6) so durchsetzt, **daß** die Wandflächen der mindestens einen Aussparung unter statischer Vorlast zueinander beabstandet bleiben.

2. Hydrolager nach Anspruch 1,
**dadurch gekennzeichnet,**
**daß** die Materialaussparungen (8) weitgehend kreiszylindrisch ausgebildet sind.

3. Hydrolager nach Anspruch 1 oder 2,
**dadurch gekennzeichnet**
**daß** sich die Konturen der Materialaussparungen (8) axial an ihrem Außenumfang berühren oder einander unter Bildung von Ringspaltsektoren durchdringen.

4. Hydrolager nach 1 bis 3,
**dadurch gekennzeichnet**
**daß** an der Stirnseite (7) des Tragkörpers (2) mindestens eine sich nach radial auswärts erstreckende Materialaussparung (9) so vorgesehen ist, **daß** die mindestens eine radiale Materialaussparung (9) in Axialrichtung des Tragkörpers (2) zu der mindestens einen axialen Materialaussparung (8) in der Radialebene winkelig versetzt angeordnet ist.

5. Hydrolager nach Anspruch 4,
**dadurch gekennzeichnet**
**daß** sich die radiale Materialaussparung (9) von nahe der Aufnahmevorrichtung (3) im Tragkörper (2) her nach radial außen erstreckt und so ausgebildet ist, **daß** ihre radial innenliegende Wandfläche und ihre radial außenliegende Wandfläche axial unterschiedliche Höhen haben.

## Claims

1. A hydraulic bearing (1) for a damping arrangement of vibrating masses, comprising an elastomeric support member (2) into which a receiving device (3) having a bore (5) for connecting the bearing (1) to the vibrating mass penetrates and is embedded, and also comprising a casing (11) which non-positively abuts the support member (2) on a positioning device, **characterised in that**
the support member (2) has at least one axial recess (8) in its material, disposed on a circular segment concentric with the bore (5) in the receiving device (3) and extending axially from one endface (6) of the support member (2) towards the opposite endface (7) of the support member (2) and so extends through the receiving device (3) at the endface (6) that the wall surfaces of the at least one recess are spaced apart under static preloading.

2. A hydraulic bearing according to claim 1, **characterised in that** the recesses (6) are substantially circular cylindrical.

3. A hydraulic bearing according to claim 1 or 2, **characterised in that** the contours of the recesses (8) touch axially at their outer periphery or interpenetrate, forming sectors of an annular gap.

4. A hydraulic bearing according to 1 to 3, **characterised in that** at least one radially outwardly extending recess (9) in the material is provided at the endface (7) of the support member (2), such that the at least one radial recess (9) in the axial direction of the support member (2) is offset at an angle to the at least one axial recess (8) in the radial plane.

5. A hydraulic bearing according to claim 4, **characterised in that** the radial recess (9) extends radially outward in the support member (2) from near the receiving device (3) and is so constructed that its radially inner wall surface and its radially outer wall surface have different heights axially.

## Revendications

1. Support hydraulique (1) destiné à un montage amortisseur de masses oscillantes, avec un corps porteur (2) présentant l'élasticité du caoutchouc, dans lequel pénètre, et est encastré, un dispositif de logement (3) comportant un alésage (5) pour relier le support (1) à la masse oscillante, et un carter (11) qui soutient le corps porteur (2) par adhérence au niveau d'un dispositif d'installation,
**caractérisé en ce que** le corps porteur (2) présente au moins un évidement axial (8), qui est situé sur un segment de cercle concentrique par rapport à l'alésage (5) du dispositif de logement (3) et qui s'étend axialement à partir d'une face (6) du corps porteur (2) en direction de la face (7) opposée du corps porteur (2), lequel évidement traverse le dispositif de logement (3) au niveau de la face (6) de telle sorte que les surfaces de paroi dudit au moins un évidement restent écartées l'une de l'autre sous une précharge statique.

2. Support hydraulique selon la revendication 1,
**caractérisé en ce que** les évidements (8) sont réalisés, dans une large mesure, sous une forme cylindrique circulaire.

3. Support hydraulique selon la revendication 1 ou 2,
**caractérisé en ce que** les contours des évidements (8) se touchent axialement au niveau de leur périphérie extérieure ou se recoupent entre eux en formant des secteurs de passages annulaires.

4. Support hydraulique selon les revendications 1 à 3,
**caractérisé en ce qu'**il est prévu, au niveau de la face (7) du corps porteur (2), au moins un évidement (9) qui s'étend radialement vers l'extérieur de telle sorte que ledit au moins un évidement radial (9) soit disposé, dans le sens axial du corps porteur (2) de manière angulairement décalée par rapport audit au moins un évidement axial (8), dans le plan radial.

5. Support hydraulique selon la revendication 4,
**caractérisé en ce que** l'évidement radial (9) s'étend, depuis la proximité immédiate du dispositif de logement (3) dans le corps porteur (2), radialement vers l'extérieur et **en ce qu'**il est formé de telle sorte que sa surface de paroi située radialement à l'intérieur et sa surface de paroi, située radialement à l'extérieur, aient axialement des hauteurs différentes.
